# EUROPÄISCHE PATENTSCHRIFT

(11) **EP 1 141 090 B1**
(45) Veröffentlichungstag und Bekanntmachung des Hinweises auf die Patenterteilung: **27.04.2005**
(21) Anmeldenummer: 99963482.7
(22) Anmeldetag: 10.12.1999
(51) Int. Cl.: C08G 69/16, C08G 69/02, C08G 69/28

(54) **VERFAHREN ZUR HERSTELLUNG VON VERZWEIGTEN POLYAMIDEN**
METHOD OF PRODUCING BRANCHED POLYAMIDES
PROCEDE DE PREPARATION DE POLYAMIDES RAMIFIES

(30) Priorität: 23.12.1998 DE 19859929
(43) Veröffentlichungstag der Anmeldung: 10.10.2001
(73) Patentinhaber: Bayer Aktiengesellschaft, 51368 Leverkusen (DE)
(72) Erfinder: JOACHIMI, Detlev, D-47800 Krefeld (DE); DIETRICH, Hans-Jürgen, D-47829 Krefeld (DE); MORHENN, Heinrich, D-50829 Köln (DE); SCHERER, Cliff, D-41366 Schwalmtal (DE); GITTINGER, Andreas, D-47800 Krefeld (DE); BRUDER, Friedrich-Karl, D-47800 Krefeld (DE)
(86) Internationale Anmeldenummer: PCT/EP1999/009770
(87) Internationale Veröffentlichungsnummer: WO 2000/039192

(56) Entgegenhaltungen:
- EP-A- 0 345 648
- WO-A-98/08889
- DE-A- 2 233 768
- DE-A- 4 132 080
- DE-A- 19 542 928
- "Kunststoff Handbuch, 3/4, Polyamide " 1998 , CARL HANSER VERLAG , MÜNCHEN WIEN XP002136469 Seite 374 -Seite 375 Seite 385 -Seite 387

## Beschreibung

Gegenstand der Anmeldung ist ein mindestens zweistufiges Verfahren zur Herstellung von Polyamiden und die Verwendung der daraus erhaltenen Polyamide für Anwendungen wie beispielsweise Spritzgießen, Extrusion, Extrusionsblasformen und Thermoformen.

Polyamide sind eine seit vielen Jahren bewährte Klasse von Polymeren. Sie zeichnen sich besonders durch leichte Verarbeitbarkeit, sehr gute mechanische Eigenschaften, sehr gute elektrische Eigenschaften, hohe Wärmeformbeständigkeit, gute Chemikalienbeständigkeit und sehr gute Oberflächenqualität aus.

Dabei können die Polyamide nach verschiedenen Verfahren hergestellt und aus sehr unterschiedlichen Bausteinen synthetisiert wurden und die im speziellen Anwendungsfall, allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden.

Die Eigenschaften der Polyamide lassen sich durch Zusatz von Elastomeren verbessern z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen (z.B. Aminogruppen oder Sulfonatgruppen zur besseren Anfärbbarkeit von Fasern mit sauren bzw. basischen Farbstoffen) eingesetzt werden.

Die technisch relevanten Verfahren zur Herstellung von Polyamiden laufen ausnahmslos über die Polykondensation in der Schmelze. In diesem Rahmen wird auch die hydrolytische Polymerisation von Lactamen als Polykondensation verstanden.

Diese Verfahren liefern aber wegen der mit steigendem Molekulargewicht sehr rasch wachsenden Schmelzeviskosität nur relativ niedermolekulare Produkte, da eine zu hohe Schmelzeviskosität zu verschiedenen Problemen führt.

So wird die Temperaturführung sowie die Entfernung des Reaktionswassers immer schwieriger, und die lange Reaktionszeit bei den notwendigen hohen Temperaturen führt in verstärktem Maß zu Nebenreaktionen und Gelteilchenbildung, die die Qualität des Endproduktes drastisch verschlechtern können. Auch das Abspinnen wird zunehmend schwieriger bei sehr hohen Schmelzeviskositäten.

Hier bietet die Festphasennachkondensation (FPNK) entscheidende Vorteile. Aufgrund der weitaus geringeren Reaktionstemperaturen (ca. 150 bis 230°C im Vergleich zu 250 bis 280°C bei der Schmelzkondensation) wird die Gefahr der unerwünschten Nebenreaktionen und Vergelung reduziert. Da es sich bei dem nachzukondensierenden Material um definierte Partikel mit vorhandenem Zwischenteilchenvolumen handelt, ist die Aufrechterhaltung einer gleichmäßigen Reaktionstemperatur und die Entfernung des Restwassers unproblematisch. Da es sich um Partikel handelt, kommt es auch nicht zu Abspinnproblemen.

Die erreichbaren Molekulargewicht sind aber auch bei der FPNK begrenzt, da die Viskositätswerte der Produkte gegen ein Plateau laufen. Die Höhe dieses Viskositätsplateaus kann zwar durch Temperaturerhöhung gesteigert werden, doch treten dann wiederum Probleme wie Nebenreaktionen und Vergelung auf.

Es besteht daher Bedarf an einem Verfahren, welches in technisch einfach beherrschbarer Weise die Herstellung hochviskoser Polyamide in geringer Reaktionszeit und unter schonenden Bedingungen erlaubt.

Weiterhin wäre es wünschenswert Polyamide, die bei niedrigen Schergeschwindigkeiten sehr hohe Schmelzeviskositäten aufweisen, wie sie z.B. für das Extrudieren von großen Rohren oder das Extrusionsblasformen von großen Hohlkörpern (z.B. Kfz-Luftführungsrohre oder -tanks oder Kfz-Ansaugrohre) benötigt werden, sicher und schnell herstellen zu können.

Bekannte Verfahren zur Erzeugung von hochviskosen Polyamiden sind Festphasennachkondensation linearer Polyamide mittlerer Viskosität und der Einbau von Verzweigern in die Polymerketten. Letzteres kann während der Polykondensation im Batch-Verfahren bzw. im kontinuierlichen Rohrreaktor durchgeführt werden. Der Einbau von Verzweigern wie tri- und tetrafunktioneller Carbonsäuren bzw. Amine, die bei der Polykondensationsreaktion mit Monomeren eingesetzt werden, führt normalerweise zu inhomogenen Produkten mit starker Neigung zur Gelkörper- und Stippenbildung. Durch Einhaltung bestimmter Mengenverhältnisse der Einsatzstoffe ist nach EP 0 345 648 B1 eine Reduzierung der Stippenbildung möglich.

Alternativ zum Einbau von Verzweigern in der Polykondensation können Verzweiger auch über Compoundierung (z.B. auf Zweiwellenextrudern) in Polyamide eingebaut werden. EP-A-774 480 beschreibt ein Verfahren bei dem Trimesinsäure in ein Polyamid-Präpolymer eincompoundiert und anschließend einer Festphasennachkondensation unterworfen wird. Als Vorteile dieses Verfahrens werden gut steuerbares Molekulargewicht, gute Fließfähigkeit und Gesamtkristallinität bei Vermeidung von Gelkörperbildung und Vernetzung genannt. Ein Nachteil des Verfahrens ist der im Vergleich zum Verzweigereinbau in der Polykondensationsreaktion erforderliche zusätzliche Verfahrensschritt der Compoundierung.

Normalerweise führt der Einbau von Verzweigern während der Polykondensation zu teilvernetzten Strukturen bzw. Gelkörpern und zu sehr hohen Viskositäten, die insbesondere beim Abspinnen der Polymerschmelze zu Problemen führen. Ähnliche Probleme werden auch beim Einbau von Verzweigern während der Compoundierung beobachtet.

Überraschend wurde gefunden, daß der Einbau von bestimmten Verzweigern, wie z.B. mehrfunktionellen Aminen, bevorzugt tri und/oder tetrafunktionelle Amine die mindestens eine sekundäre Aminogruppe enthalten bzw. mit Salzen, enthaltend derartige Amine und Dicarbonsäuren, zur Reaktion gebracht werden, in einem zweistufigen Verfahren die Nachteile des Standes der Technik nicht aufweist.

Besonders mit trifunktionellen Aminen (wie z.B. Diethylentriamin), bevorzugt in Mengen von 0,1 bis 1,0 Gew.%, besonders bevorzugt in Mengen von 0,2 bis 0,8 Gew.-%, ergibt sich während der Polykondensation im kontinuierlichen Polykondensationsverfahren zunächst gut fließendes, weitgehend unverzweigtes und gelkörperfreies Polyamid, das sehr gut abgesponnen und granuliert werden kann. Die Polykondensation wird bevorzugt in Gegenwart der üblichen Katalysatoren und Kettenabbrecher/-regler durchgeführt. Die mehrfunktionellen Amine werden in Kombination mit Dicarbonsäuren oder höherfunktionellen Carbonsäuren eingesetzt. Das Molverhältnis von tri- oder höherfunktionellem Amin zur Dicarbonsäure ist dabei vorzugsweise > 1. Durch Festphasennachkondensation erhält rhan in einem zweiten Schritt ein strukturviskoses PA, das bei hohen Scherraten niedrige Viskositäten und bei niedrigen sehr hohe Viskositäten aufweist.

Gegenstand der Anmeldung ist daher ein Verfahren zur Herstellung von Polyamiden gekennzeichnet dadurch, dass in einem Reaktionsschritt A Diamine und Dicarbonsäuren und/oder Lactame mit wenigstens 5 Ringgliedern oder entsprechenden Aminosäuren mit mehrfunktionellen Aminen, die mindestens eine sekundäre Aminogruppe enthalten und/oder mit Salzen, enthaltend derartige Amine und Dicarbonsäuren, zur Reaktion gebracht werden, und das Reaktionsprodukt in einem weiteren Reaktionsschritt B durch Festphasennachkondensation weiterverarbeitet werden, wobei nach dem Verfahrensschritt A die Schmelzviskosität bei 270°C zwischen 120 und 1500 Pas, bevorzugt 200 und 1000 Pas und nach dem zweiten Schritt B zwischen 1000 und 8000 Pas liegt, beträgt, wobei die Schmelzviskosität bei einer Schergeschwindigkeit von 10 s⁻¹ gemessen wird.>

In dem erfindungsgemäßen Verfahren sollen im ersten Reaktionsschritt weniger als 50 Gew.-% der Polymermoleküle mehr als eine Kettenverzweigung besitzen.

Bevorzugt ist es, wenn im zweiten Reaktionsschritt bevorzugt durch Festphasennachkondensation, besonders bevorzugt bei 150 - 210°C, Langkettenverzweigungen erzeugt werden.

Das Verfahren ist dadurch gekennzeichnet, daß die Polykondensation in Gegenwart bestimmter tri- oder höherfunktioneller Amine (mit mindestens einer sekundären Aminogruppe) so durchgeführt wird, daß zunächst nur ein Teil der vorhandenen Aminogruppen zu einem wenig verzweigten Polyamid abreagiert, das noch wie ein lineares Polyamid abgesponnen werden kann. Im anschließenden Nachkondensationsschritt (gegebenenfalls nach wäßriger Extraktion) reagieren die verbliebenen Aminogruppen des Verzweigers unter Bildung der erfindungsgemäßen stärker verzweigten höhermolekularen Polyamide ab. Diese ergeben verzweigtes strukturviskoses gut verschweißbares Polyamid.

Die Materialien sind arm an Gelkörpern.

Der erste Reaktionsschritt kann in einem kontinuierlichen oder in einem diskontinuierlichen Verfahren in bekannter Weise hergestellt werden. Bei einem diskontinuierlichen Verfahren kann es sich z.B. um die Polymerisation in einem Autoklaven handeln. Bei einem kontinuierlichen Verfahren kann es sich z.B. um die Polymerisation in einem sogenannten VK-Rohr handeln. Bevorzugt erfolgt die Herstellung nach einem kontinuierlichen Verfahren, besonders bevorzugt in einem vollkontinuierlichen Rohrreaktor.

Dabei sind die bestimmten mehrfunktionelle Aminen, die mindestens eine sekundäre Aminogruppe enthalten, bevorzugt tri- und/oder tetrafunktionelle Amine, die bevorzugt in Mengen von 0,1 bis 1,0 Gew.-% bezogen auf die eingesetzte Menge Caprolactam verwendet werden.

In einer besonders bevorzugten Variante wird als Amin Diethylentriamin eingesetzt, bevorzugt in Mengen von 0,1 bis 1,0 Gew.-%, bevorzugt 0,2 bis 0,8 Gew.-% bezogen auf die eingesetzte Caprolactam-Menge.

Wichtig ist die Viskosität der Mischung nach dem ersten und zweiten Verfahrensschritt. Nach dem ersten Verfahrensschritt liegt die Schmelzviskosität bei 270°C zwischen 120 und 1500 Pas, bevorzugt 200 und 1000 Pas und nach dem zweiten Schritt zwischen 1000 und 8000 Pas um beste Ergebnisse zu erzielen, wobei die Schmelzviskosität bei einer Schergeschwindigkeit von 10 s⁻¹ gemessen wurde.

Bevorzugte Polyamide hergestellt mit dem erfindungsgemäßen Verfahren sind sowohl teilkristalline wie auch amorphe Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen aliphatische und/oder aromatische und/oder halbaromatische Dicarbonsäuren wie Adipinsäure, 2,2,4- und 2,4,4-Trimethyladipinsäure, Azelainsäure, Sebazinsäure, Decandicarbonsäure, Dodecandicarbonsäure, Isophthalsäure, Terephthalsäure, aliphatische und aromatische Diamine wie Hexamethylendiamin, 2,2,4- und 2,4,4-Trimethylhexamethylendiamin, die isomeren Diamino-dicyclohexylmethane, Diamino-dicyclohexylpropane, Isophorondiamin, die isomeren Xylylendiamine, Bis-aminomethyl-cyclohexan, Aminocarbonsäuren wie Aminocapronsäure, Aminoundecansäure, Aminolaurinsäure bzw. die entsprechenden Lactame in Betracht. Copolyamide aus mehreren der genannten Monomeren sind eingeschlossen.

Besonders bevorzugt werden Caprolactame, ganz besonders bevorzugt ε-Caprolactam eingesetzt.

Bevorzugt hergestellt werden Polyamid 6 oder Polyamid 11 oder Polyamid 12 oder Polyamid 6,6 oder Polyamid 4,6 oder Polyamid 6,10 oder ein Copolyamid aus den Einheiten der genannten Homopolyamide oder ein Copolyamid aus Caprolactameinheiten und Einheiten abgeleitet von Hexamethylendiamin und Isophthalsäure oder ein Copolyamid aus Caprolactameinheiten und Einheiten abgeleitet von Isophorondiamin und Isophthalsäure. Besonders bevorzugt hergestellt werden Polyamid 6 oder Copolyamide mit Polyamid 6.

Die mit dem erfindungsgemäßen Verfahren hergestellten Polyamide können auch im Gemisch mit anderen Polyamiden und/oder weiteren Polymeren eingesetzt werden.

Zusätzlich können die Materialien noch Verstärkungsstoffe wie z.B. faserförmige oder teilchenförmige Verstärkungsstoffe wie z.B. Glasfasern, C-Fasern, Aramidfasern oder Glaskugeln, Füllstoffe wie Kaolin, Wollastonit und Talkum, Brandschutzmittel wie z.B. Phosphorverbindungen, organische Halogenverbindungen, Stickstoffverbindungen und/oder Magnesiumhydroxid, Stabilisatoren, Farbmittel, Farbstoffe oder Pigmente, Verarbeitungshilfsmittel wie z.B. Gleitmittel, Nukleierungsmittel, Stabilisatoren, Antiblockingmittel, Schlagzähmodifikatoren wie z.B. Kautschuke oder Polyolefine u.ä enthalten.

Die Polyamide können zusätzlich weitere faserförmige Verstärkungsstoffe und/oder mineralische Füllstoffe enthalten. Als faserförmige Verstärkungsstoffe neben Glasfasern kommen Kohlefasem, Aramidfasern, Mineralfasern und Whisker in Betracht. Als geeignete mineralische Füllstoffe seien beispielhaft Kalziumcarbonat, Dolomit, Kalziumsulfat, Glimmer, Fluorglimmer, Wollastonit, Talkum und Kaolin genannt. Aber auch andere Oxide oder Oxidhydrate eines Elementes ausgewählt aus der Gruppe Bor, Aluminium, Gallium, Indium, Silizium, Zinn, Titan, Zirkonium, Zink, Ytrium oder Eisen können eingesetzt werden. Zur Verbesserung der mechanischen Eigenschaften können die faserförmigen Verstärkungsstoffe und die mineralischen Füllstoffe oberflächenbehandelt sein.

Die Zugabe der Füllstoffe kann vor, während oder nach der Polymerisation der Monomere zum Polyamid erfolgen. Erfolgt die Zugabe der Füllstoffe nach der Polymerisation, so erfolgt sie vorzugsweise durch Zugabe zur Polyamidschmelze in einem Extruder. Erfolgt die Zugabe der Füllstoffe vor oder während der Polymerisation, so kann die Polymerisation Phasen umfassen, in denen in Gegenwart von 1 bis 50 Gewichtsprozent Wasser gearbeitet wird.

Die Füllstoffe können bei der Zugabe schon als Partikel mit der letztendlich in der Formmasse auftretenden Partikelgröße vorliegen. Alternativ können die Füllstoffe in Form von Vorstufen zugegeben werden, aus denen die letztendlich in der Formmasse auftretenden Partikel erst im Laufe der Zugabe bzw. Einarbeitung entstehen. Diese Vorstufen können Hilfsstoffe enthalten, die z.B. dazu dienen, die Vorstufe zu stabilisieren oder die feinteilige Verteilung der Partikel in der Formmasse zu gewährleisten. Solche Hilfsstoffe können z.B. Oberflächenmodifikatoren sein. Eine solche Vorstufe kann im Falle des Siliziumdioxids als Füllstoff z.B. Kieselsol oder Wasserglas sein. Im Falle des genannten Beispiels Kieselsol werden üblicherweise das Sol stabilisierende Hilfsstoffe wie z.B. Laugen wie Natronlauge oder Ammoniak eingesetzt. Diese Hilfsstoffe können nach dem Sol-Gel-Übergang in den entstehenden Partikeln verbleiben.

Die genannten Füllstoffe werden in einer Konzentration von 0,1 bis 10 Gewichtsprozent bezogen auf die Gesamtmasse des Polyamids eingesetzt. Bevorzugt werden die genannten Füllstoffe in einer Konzentration von 0,5 bis 5 Gewichtsprozent eingesetzt.

Als Brand- oder Flammschutzmittel kommt beispielsweise roter Phosphor in Frage wie z.B. aus der DE-A-3 713 746 A 1 (= US-A-4 877 823) und EP-A-299 444 (= US-A-5 081 222) bekannt. Hauptsächlich wird er glasfaserverstärktem PA 66 und 6/6T zugemischt. Wegen der roten Eigenfarbe des Phosphors und seines pigmentartigen Charakters können solche Compounds oft nur in dunklen Farben geliefert werden. Außerdem neigen sie bei der Einwirkung von Feuchtigkeit und Wärme zur Bildung von Phosphin und Phosphaten (durch Disproportionierung des Phosphors). Phosphin korrodiert z.B. die kupferhaltigen Kontakte in elektrischen Installationen und Anlagen. Phosphate bilden dagegen leitfähige Beläge zwischen den elektrischen Kontakten. Durch geeignete Stabilisatoren wird die Disproportionierungsreaktion des Phosphors verzögert, aber nicht unterbunden.

Aber auch bromierte Diphenyle oder Diphenylether in Kombination mit Antimontrioxid als Zusatz zu Polyamiden wurden lange Zeit eingesetzt. Zunehmend werden folgende chlorierte cycloaliphatische Kohlenwasserstoffe (Dechlorane® plus von Occidental Chemical Co.), bromierte Styrol-Oligomere (z.B. in DE-A-2 703 419) und kernbromierte Polystyrole (z.B. Pyro-Chek 68® von FERRO Chemicals) genutzt.

Als Synergist zu den genannten Halogenverbindungen werden auch Zinksalze oder Eisenoxide eingesetzt. Die meisten Flammschutzmittel auf Halogenbasis beginnen sich bei den Verarbeitungstemperaturen von Polyamiden zu zersetzen. Dabei bilden sich korrodierend wirkende Gase. Als Folge werden z.B. die elektrischen Kontakte in Schaltern bzw. elektrischen Installationen zerstört. Außerdem werden die elektrischen Eigenschaften der Polyamide durch die gebildeten ionogenen Spaltprodukte beeinträchtigt.

Als weitere Alternative haben sich vor allem Melaminsalze als Flammschutzmittel besonders für unverstärkte Polyamide bewährt. Solche Produkte haben eine helle Eigenfarbe und besitzen gute elektrische Eigenschaften. Nachteilig ist die relativ niedrige Zersetzungstemperatur von Melaminsalzen.

Darüberhinaus hat sich Magnesiumhydroxid als Flammschutzmittel für Polyolefine und Elastomere seit langem bewährt. Es hat gegenüber dem bisher verwendeten Aluminiumhydroxid den Vorteil der höheren Wasserabspaltungstemperatur (>340°C). Der Einsatz von Magnesiumhydroxid in Polyamiden ist in der Literatur beschrieben. Eine Konzentration von über 55 % ist allerdings erforderlich, um bei 1,6 mm Dicke die Bewertung V 0 nach UL 94 (US Brandprüfung nach Underwriter Laboratories) zu erreichen. Die Verarbeitbarkeit solcher Produkte ist problematisch. Die mechanischen Eigenschaften daraus hergestellter Formkörper sinken auf ein tieferes Niveau. Außerdem wird die Oberflächenqualität merklich verschlechtert. In der EP-A-0 335 165 (= US-4 963 610) wird vorgeschlagen, Polyamid mit 0,1 bis 20 Gew.-% eines funktionalisierten Olefinhomo- oder Copolymeren und 3 bis 30 Gew.-% einer Verstärkungsfaser abzumischen, um mit 40 bis 70 Gew.-% speziellen Magnesiumhydroxidsorten (spez. Oberfläche weniger als 18 m²/g) flammhemmende Compounds herzustellen.

Aber auch Komponenten aus wenig Magnesiumhydroxid haben sich bewährt, wenn man Polyamide mit thermoplastischen aromatischen Polymeren und Polyamid gemäß der EP-A- 605 861 verwendet.

Als Schlagzähmodifikatoren eignen sich beispielsweise besonders die Diepoxide auf Basis der Diglycidylether, (Bisphenol A und Epichlorhydrin), auf Basis von Aminepoxidharzen (Anilin und Epichlorhydrin), auf Basis von Diglycidylester (cycloaliphatische Dicarbonsäuren und Epichlorhydrin) einzeln oder in Mischungen miteinander, sowie vorzugsweise Diepoxide auf Basis 2,2-Bis[p-hydroxy-phenyl]-propandiglycidylether, Bis-[p-(N-methyl-N-2,3-epoxypropylamino)-phenyl]-methan, wie sie in der EP-A-685 528 beschrieben sind. Hierdurch kann die Standfestigkeit der Schmelze und die Verschweißbarkeit von extrudierten oder gespritzten Teilen z.B. nach dem Heißelement-, Heißsiegel-, Vibrations- oder Hochfrequenzverfahren verbessert werden.

Die Weiterverarbeitung der mit dem erfindungsgemäßen Verfahren hergestellten Polyamide kann mittels allen im Stand der Technik für Polyamide bekannten Verfahren erfolgen, z.B. durch Spritzgießen, Extrusion, Coextrusion, Extrusionsblasformen, Beschichten, Kaschieren Thermoformen oder Blasformen. Im Falle von Folien kann die Extrusion oder Coextrusion z. B. nach dem sogenannten Chill-roll-Verfahren oder nach dem Blasextrusionsverfahren bzw. Blascoextrusionsverfahren erfolgen. Bei mehrschichtigen Folien oder Hohlkörpern können die handelsüblichen Haftvermittler eingesetzt werden. Bevorzugt sind allerdings Spritzgieß- bzw. Extrusions- bzw. Extrusionsblasformverfahren Folien und Platten aus erfindungsgemäßen Polyamiden können außerdem im Tiefziehverfahren und/oder anderen Thermoformverfahren umgeformt werden.

Typische Produkte aus den mit dem erfindungsgemäßen Verfahren hergestellten Polyamiden sind alle im Stand der Technik aus Polyamiden oder Polyamidmischungen bekannten Produkte, bevorzugt Folien, Fasern, Hohlkörper oder andere Formkörper.

Folien oder Hohlkörper können dabei aus nur einer Polyamidschicht bestehen oder einen mehrschichtigen Aufbau aufweisen. Im Falle des mehrschichtigen Aufbaues können die weiteren Schichten z.B. aus Polyolefinen wie z.B. Polyethylen oder Polyethylencopolymeren wie z.B. Copolymeren aus Ethylen und Acrylsäure oder Methacrylsäure oder Barrierepolymeren wie z.B. Polyvinylidenchlorid oder Copolymeren aus Ethylen und Vinylalkohol (EVAL oder EVOH genannt) bestehen.

Aber auch zur Herstellung anderer Formkörper wie Profile, Leisten, Rohre oder Schienen können die mit dem erfindungsgemäßen Verfahren hergestellten Polyamide verwendet werden.

Bevorzugt ist die Verwendung zur Herstellung von Kfz-Ansaugrohren in Mehrschalentechnik, wobei die Formmassen gegebenenfalls noch mit Verstärkungsstoffen wie Glasfasern, C-Fasern, Aramidfasern, und / oder mineralischen Füllstoffen wie Kaolin, Wollastonit, Talkum und üblichen Stabilisatoren, Farbmitteln, Verarbeitungshilfsmitteln etc. modifiziert sein können.

### Beispiele:

### Vergleichsbeispiel 1: Verzweigung im VK-Rohr

In einem zweistufigen VK-Rohr, bestehend aus Druck- und Entspannungsstufe, wird Caprolactam in Gegenwart von 0,58 Gew. % (bezogen auf Caprolactamdurchsatz) eines Salzes aus Trimesinsäure (1,3,5-Benzoltricarbonsäure) und Hexamethylendiamin (HMDA), bestehend aus 3 Mol Hexamethylendiamin pro 2 Mol Trimesinsäure, bei ca. 270°C polykondensiert. Das zum Reaktionsstart erforderliche Wasser und der Verzweiger (Salz aus Trimesinsäure und Hexamethylendiamin) werden als gemeinsame Lösung in einem Seitenstrom in die Druckstufe des VK-Rohres zudosiert. Der Caprolactamdurchsatz beträgt 12 kg/h Weitere Verfahrensparameter:

| | |
|---|---|
| Wassermenge zum Reaktionsstart | 0,5 Gew.-% |
| Verweilzeit Druckstufe | 3,5 h |
| Verweilzeit Entspannungsstufe | 17,7 h |

Es wird ein hochviskoses Polyamid erhalten, das nur unter großen Schwierigkeiten abgesponnen werden kann. Nach anschließender Granulierung und der üblichen wäßrigen Extraktion zur Entfernung von niedermolekularen Anteilen, erhält man ein Produkt, das durch Gelkörper verunreinigt ist, die auf lokale Vernetzung zurückzuführen sind.

### Vergleichsbeispiel 2:

In einer doppelwandigen ölbeheizten Glasapparatur mit Spiralwendelrührer und beheizter Glasdüse wird eine Mischung aus 273 g (2,41 Mol) Caprolactam, 31,4 g (0,24 Mol) Aminohexansäure, 0,9 g (8,72 mmol) Diethylentriamin und 1,27 g (8,72 mmol) Adipinsäure unter Stickstoff eine Stunde bei 200°C gerührt. Anschließend wird auf 270°C aufgeheizt und 4 h bei dieser Temperatur polykondensiert. Die erreichte Viskosität ist so hoch, daß das Produkt nur unter Schwierigkeiten sehr langsam abgesponnen werden kann (Temperaturerhöhung auf 290°C ist erforderlich, um überhaupt abspinnen zu können).

### Beispiel 3: Verzweigung im VK-Rohr mit Diethylentriamin

In einem zweistufigen VK-Rohr, bestehend aus Druck- und Entspannungsstufe, wird Caprolactam mit einem Salz aus Diethylentriamin und Adipinsäure (Molverhältnis 1: 1) in Gegenwart von Essigsäure, bei ca. 270°C kontinuierlich polykondensiert. Das zum Reaktionsstart erforderliche Wasser und der Verzweiger (Salz aus Diethylentriamin und Adipinsäure) werden als gemeinsame Lösung in einem Seitenstrom in die Druckstufe des VK-Rohres zudosiert. Der Caprolactamdurchsatz beträgt 12 kg/h (Konzentrationsverhältnisse Verzweiger s. Tab. 1).

### Weitere Verfahrensparameter:

| | |
|---|---|
| Wassermenge zum Reaktionsstart | 1,5 Gew.-% |
| Verweilzeit Druckstufe (3,4 bar) | 3 h |
| Verweilzeit Entspannungsstufe | 12,5 h |

Es wird ein hochviskoses Polyamid erhalten, das ohne Schwierigkeiten abgesponnen werden kann. Nach anschließender Granulierung und der üblichen wäßrigen Extraktion zur Entfernung von niedermolekularen Anteilen, erhält man ein Produkt, das durch Festphasennachkondensation unter Stickstoff bei 170 - 180°C problemlos zu sehr hohen Schmelzviskositäten nachkondensiert werden kann.

### Beispiel 4:

In einem einstufigen VK-Rohr, wird Caprolactam in Gegenwart von 0,32 Gew.-% Diethylentriamin und 0,42 Gew.-% Adipinsäure (Molverhältnis Diethylentriamin / Adipinsäure: 1,08) sowie 0,086 Gew.-% Propionsäure polykondensiert. Adipinsäure und Diethylentriamin werden dabei als wäßrige Lösung, bestehend aus 21,6 Gew.-% Diethylentriamin, 28,4 Gew.-% Adipinsäure und 50 Gew.-% Wasser kontinuierlich im Seitenstrom zudosiert. Der Caprolactamdurchsatz beträgt 500 kg/h, die Temperatur liegt im Bereich 250 - 280°C. Es wird ein hochviskoses Polyamid erhalten, das ohne Schwierigkeiten abgesponnen werden kann. Nach anschließender Granulierung und der üblichen wäßrigen Extraktion zur Entfernung von niedermolekularen Anteilen, erhält man ein Produkt, das durch Festphasennachkondensation unter Stickstoff bei 170 - 180°C problemlos zu sehr hohen Schmelzviskositäten nachkondensiert werden kann.

### Beispiel 5 (Vergleichsversuch):

Handelsübliches PA6 mittlerer Viskosität (relative Lösungsviskosität 1% ige Lösung in Metakresol: 2,9; z.B. Durethan B 29) wird im trockenen Stickstoffstrom 10 h bei 180° C nachkondensiert. Die Schmelzeviskosität steigt an, liegt aber deutlich unter dem Niveau der verzweigten Polyamide.

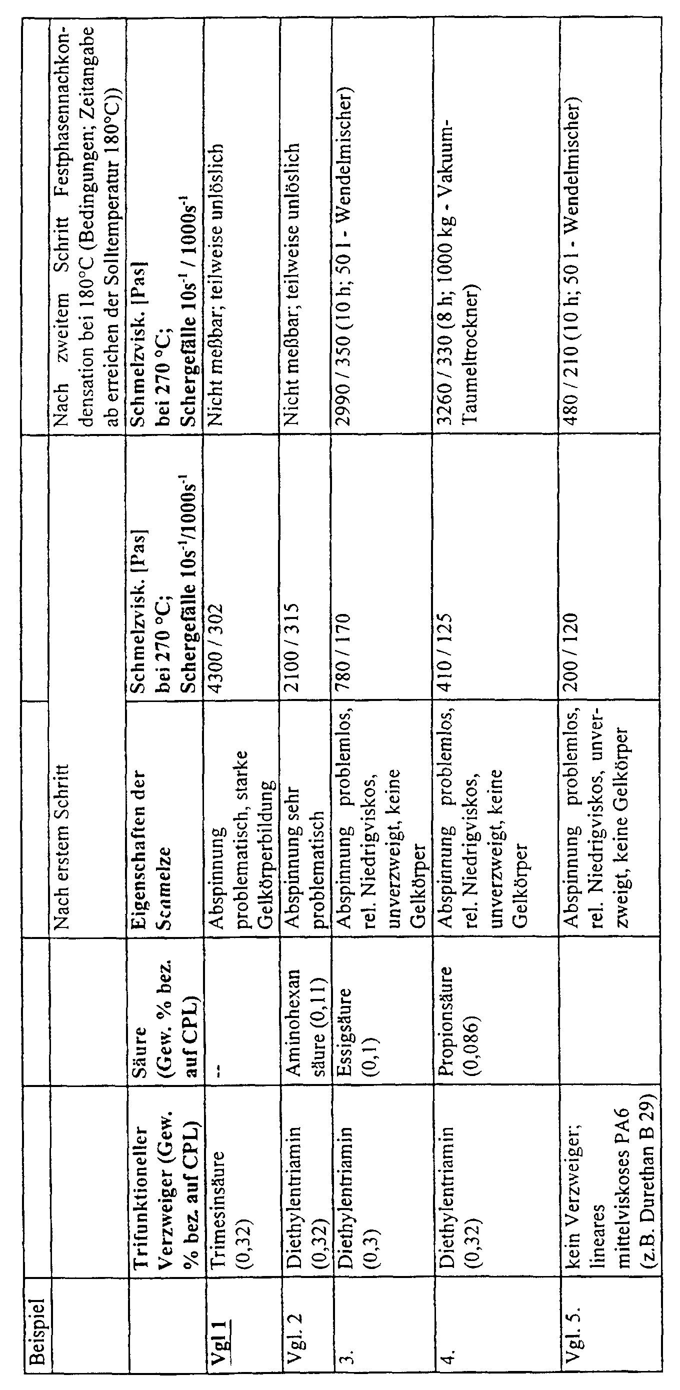

## Patentansprüche

1. Verfahren zur Herstellung von Polyamiden **gekennzeichnet dadurch, dass** in einem Reaktionsschritt A Diamine und Dicarbonsäuren und/oder Lactame mit wenigstens 5 Ringgliedern oder entsprechenden Aminosäuren mit mehrfunktionellen Aminen, die mindestens eine sekundäre Aminogruppe enthalten und/oder mit Salzen, enthaltend derartige Amine und Dicarbonsäuren, zur Reaktion gebracht werden, und das Reaktionsprodukt in einem weiteren Reaktionsschritt B durch Festphasennachkondensation weiterverarbeitet werden, wobei nach dem Verfahrensschritt A die Schmelzviskosität bei 270°C zwischen 120 und 1500 Pas und nach dem zweiten Schritt B zwischen 1000 und 8000 Pas liegt, beträgt, wobei die Schmelzviskosität bei einer Schergeschwindigkeit von 10 s⁻¹ gemessen wird.

2. Verfahren nach Anspruch 1, **dadurch gekennzeichnet, dass** der erste Reaktionsschritt in einem vollkontinuierlichen Rohrreaktor ausgeführt wird.

3. Verfahren nach mindestens einem der vorstehenden Ansprüche, **dadurch gekennzeichnet, dass** bei der Festphasennachkondensation im Temperaturbereich 150 - 210°C gearbeitet wird.

4. Verfahren nach mindestens einem der vorstehenden Ansprüche, **dadurch gekennzeichnet, dass** vor der Festphasennachkondensation eine Extraktion der Dimeren und Restmonomeren erfolgt

5. Verfahren nach einem oder mehreren der vorangegangenen Ansprüche, wobei als Monomer Caprolactam eingesetzt wird.

6. Verfahren nach mindestens einem der vorstehenden Ansprüche, **dadurch gekennzeichnet, dass** als mehrfunktionelle Amine, die mindestens eine sekundäre Aminogruppe enthalten tri- und/oder tetrafunktionelle Amine eingesetzt werden.

7. Verfahren nach mindestens einem der vorstehenden Ansprüche, **dadurch gekennzeichnet, dass** als Amin Diethylentriamin eingesetzt wird.

## Claims

1. Process for preparing polyamides, **characterized in that** it comprises a reaction step A of reacting diamines and dicarboxylic acids and/or lactams having at least 5 ring members or corresponding amino acids with multifunctional amines containing at least one secondary amino group and/or with salts containing such amines and dicarboxylic acids and a further reaction step B of further processing the reaction product by solid state postcondensation, wherein the melt viscosity at 270°C is between 120 and 1500 Pas after process step A and between 1000 and 8000 Pas after the second step B, the melt viscosity being measured at a shear rate of 10 s⁻¹.

2. Process according to Claim 1, **characterized in that** the first reaction step is carried out in a fully continuous tubular reactor.

3. Process according to at least one of the preceding claims, **characterized in that** the solid state postcondensation is carried out in the temperature range 150-210°C.

4. Process according to at least one of the preceding claims, **characterized in that** dimers and residual monomers are extracted prior to the solid state postcondensation.

5. Process according to one or more of the preceding claims, wherein caprolactam is used as a monomer.

6. Process according to at least one of the preceding claims, **characterized in that** tri- and/or tetrafunctional amines are used as multifunctional amines containing at least one secondary amino group.

7. Process according to at least one of the preceding claims, **characterized in that** diethylenetriamine is used as an amine.

## Revendications

1. Procédé de préparation de polyamides, **caractérisé en ce que**, dans une étape réactionnelle A, on fait réagir des diamines et des acides dicarboxyliques et/ou des lactames ayant au moins 5 termes dans le noyau, ou bien des aminoacides correspondants, avec des amines plurifonctionnelles contenant au moins un groupe amino secondaire et/ou avec des sels contenant ces amines et ces acides dicarboxyliques, et **en ce que** l'on transforme le produit réactionnel dans une autre étape réactionnelle B par une condensation ultérieure en phase solide, la viscosité en fusion à 270°C se situant dans la plage de 120 à 1500 Pa·s après l'étape de procédé A et dans la plage de 1000 à 8000 Pa·s après la deuxième étape B, la viscosité en fusion étant mesurée à une vitesse de cisaillement de 10 s⁻¹.

2. Procédé selon la revendication 1, **caractérisé en ce que** la première étape réactionnelle s'effectue dans un réacteur tubulaire entièrement en continu.

3. Procédé selon l'une au moins des revendications précédentes, **caractérisé en ce que**, lors de la condensation ultérieure en phase solide, on travaille dans une plage de température de 150 à 210°C.

4. Procédé selon l'une au moins des revendications précédentes, **caractérisé en ce que**, avant la condensation ultérieure en phase solide, on effectue une extraction des dimères et des monomères résiduels.

5. Procédé selon une ou plusieurs des revendications précédentes, dans lequel le monomère utilisé est du caprolactame.

6. Procédé selon l'une au moins des revendications précédentes, **caractérisé en ce que**, comme amines plurifonctionnelles contenant au moins un groupe amino secondaire, on utilise des amines tri- et/ou tétrafonctionnelles.

7. Procédé selon l'une au moins des revendications précédentes, **caractérisé en ce que** l'amine utilisée est la diéthylène triamine.
